# FASCICULE DE BREVET EUROPEEN

(11) **EP 2 052 525 B1**
(45) Date de publication et mention de la délivrance du brevet: **24.03.2010**
(21) Numéro de dépôt: 07823696.5
(22) Date de dépôt: 06.08.2007
(51) Int. Cl.: H04L 29/08

(54) **PROCEDE DE COMMUNICATION PAR MESSAGES ET DISPOSITIF ASSOCIE**
KOMMUNIKATIONSVERFAHREN, DAS NACHRICHTEN VERWENDET FÜR ASSOZIIERTES GERÄT
METHOD OF COMMUNICATION BY MEANS OF MESSAGES AND ASSOCIATED DEVICE

(30) Priorité: 08.08.2006 FR 0653321
(43) Date de publication de la demande: 29.04.2009
(73) Titulaire: FRANCE TELECOM, 75015 Paris (FR)
(72) Inventeur: WEENS, Franck, F-92370 Chaville (FR); KIESSLING, Lars, F-92320 Chatillon (FR); BARRANCO, Jocelyn, F-92130 Issy-les-moulineaux (FR)
(86) Numéro de dépôt international: PCT/FR2007/051790
(87) Numéro de publication internationale: WO 2008/017788

(56) Documents cités:
- WO-A-01/61933
- US-A1- 2003 145 067
- US-A1- 2006 133 409
- US-B1- 6 775 276

## Description

L'invention concerne le domaine des télécommunications, et plus particulièrement, un procédé de communication entre un dispositif émetteur et un dispositif destinataire ainsi qu'un dispositif, côté émetteur ou côté destinataire, omettant en oeuvre un tel procédé.

Dans le domaine particulier des communications machine à machine, appelé usuellement M2M ("Machine To Machine"), il existe différentes manières pour une machine ou un équipement, pourvu d'une application embarquée, de communiquer avec un dispositif distant, par exemple un dispositif distant mettant en oeuvre une application de gestion de cet équipement.

Les procédés de communication connus utilisent un mode de communication par échanges de messages entre cet équipement et un modem associé. Ces messages sont usuellement sous forme de commandes AT, permettant l'envoi au modem de toute sorte de données et/ou paramètres de configuration de la connexion au réseau de communication, en vue, par exemple, de la transmission via ce réseau de données à un serveur ou dispositif distant.

Les inventeurs ont constaté que le mode de communication entre un équipement et son modem associé est très variable d'un modem à l'autre dès qu'il s'agit de messages non standardisés. Il en résulte que l'application embarquée dans l'équipement doit chaque fois être développée spécifiquement pour un modem visé.

En outre, la connexion au réseau ainsi que l'échange de données à travers le réseau peuvent s'effectuer de différentes manières, par exemple par envoi d'un message court de type SMS (Short Message Service), par l'établissement d'une connexion GPRS pour un transfert de données conforme au protocole FTP (File Transfert Protocol) ou HTTP (Hypertext Transfert Protocol), etc. D'autres examples se trouvent dans WO-A-01/61933 et US-A1-2003/145067. Ainsi, la manière dont l'application embarquée commande le modem est donc susceptible de varier d'un modem à un autre. Ceci entraîne des coûts de développement importants.

Les inventeurs ont donc formulé le besoin de disposer d'un mode de communication simple et générique, adapté pour la mise en oeuvre d'une communication entre un équipement et un modem et applicable à tout type de modem. L'invention ne présente pas les inconvénients décrits ci-dessus.

L'invention a pour objet, selon un premier aspect, un procédé de communication entre un dispositif émetteur et un dispositif destinataire, comprenant
- une étape de transmission, depuis le dispositif émetteur vers le dispositif destinataire, d'un premier message comprenant :

- un premier identifiant de service relatif à un premier service de transport de données,
- un premier ensemble de données correspondant à une configuration dudit premier service de transport de données,
- une étape de transmission, depuis le dispositif émetteur vers le dispositif destinataire, d'un deuxième message comprenant :

- un premier identifiant de protocole relatif à un premier protocole de transmission de données,
- un deuxième ensemble de données correspondant à une configuration dudit premier protocole de transmission de données,
le premier message et le deuxième message étant envoyés séparément.

L'invention repose sur une constatation faite par les inventeurs selon laquelle il est possible de découpler la configuration du service de transport de données de celle du protocole de transmission de données, et notamment, d'envoyer séparément et indépendamment deux messages de configuration distincts.

Cela divise la phase de configuration d'une liaison de communication à établir en une succession d'étapes simples. En outre, cela permet d'envisager d'utiliser plusieurs protocoles avec un même service de transport de données, ou réciproquement, plusieurs services de transport de données avec un même protocole, tout en envoyant une seule fois les données de configuration de protocole ou de service.

De préférence, le format du premier message est indépendant du service de transport de données identifié par le premier identifiant de service. L'envoi de données de configuration de service est ainsi simplifié par l'utilisation d'un format de message commun à tous les services.

De même, le format du deuxième message est de préférence indépendant du protocole de transmission de données identifié par le premier identifiant de protocole. L'envoi de données de configuration de protocole est ainsi simplifié par l'utilisation d'un format de message commun à tous les protocoles.

En conséquence, quel que soit le protocole visé et quel que soit le service de transport visé, un dispositif émetteur pourra communiquer avec un dispositif destinataire quelconque, du moment que ce dispositif destinataire connaît les formats de message utilisés. Il en résulte une standardisation possible du dispositif destinataire et du mode de communication avec le dispositif destinataire.

Selon un mode de réalisation, le premier message comprend un premier identifiant d'ensemble de données, le procédé comprenant une étape d'enregistrement, par le dispositif destinataire, dans une première mémoire dudit premier ensemble de données en association avec ledit premier identifiant de service et avec ledit premier identifiant d'ensemble de données.

Dans une variante de ce premier mode de réalisation, le deuxième message comprend un deuxième identifiant d'ensemble de données, le procédé comprenant une étape d'enregistrement, par le dispositif destinataire, dans une deuxième mémoire dudit deuxième ensemble de données en association avec ledit premier identifiant de protocole et avec ledit deuxième identifiant d'ensemble de données.

L'utilisation d'identifiant relatif à un ensemble de données de configuration enregistré en mémoire permet la réutilisation de cet ensemble lors d'une prochaine action à exécuter, et ce sans avoir à envoyer à chaque fois l'ensemble de données en question. Il en résulte une simplification des envois de messages et une réduction de la quantité de données à transmettre. En outre, du fait du découplage entre la configuration du service de transport de données et celle du protocole de transmission de données, lorsqu'on envisage d'utiliser plusieurs protocoles avec un même service de transport de données, ou réciproquement, plusieurs services de transport de données avec un même protocole, il suffit d'envoyer une seule fois les données de configuration relatives à ce protocole ou à ce service.

Selon un mode de réalisation particulier, le procédé comprend une étape de transmission, depuis le dispositif émetteur vers le dispositif destinataire, en vue de l'exécution d'une première action relative à un deuxième service de transport de données, d'un troisième message comprenant un deuxième identifiant de service relatif audit deuxième service de transport de données et un premier identifiant d'action relatif à ladite première action, ainsi qu'une étape d'exécution par le dispositif destinataire de ladite première action.

Selon une variante de ce mode de réalisation particulier, le procédé comprend une étape de transmission, depuis le dispositif émetteur vers le dispositif destinataire, en vue de l'exécution d'une deuxième action relative à un deuxième protocole de transmission de données, d'un quatrième message comprenant un deuxième identifiant de protocole relatif audit deuxième protocole de transmission de données et un deuxième identifiant d'action relatif à ladite deuxième action, ainsi qu'une étape d'exécution par le dispositif destinataire de ladite deuxième action.

Ainsi le dispositif émetteur est capable très simplement de commander au moyen de messages successifs le dispositif destinataire en vue de l'exécution d'actions relatives à un protocole ou un service. Les constatations faites par les inventeurs ont montré qu'il est possible de découpler les commandes relatives à un service de celle relatives à un protocole, et ce quel que soit le service utilisé ou le protocole utilisé.

De préférence, le procédé comprend une étape de vérification, par le dispositif destinataire, de la compatibilité entre le protocole de transmission de données identifié par le deuxième identifiant de protocole et le service de transport de données identifié par le deuxième identifiant de service, ladite étape d'exécution de la deuxième action étant destinée à être exécutée sous condition de compatibilité.

Corrélativement, l'invention a également pour objet un dispositif, comprenant des moyens de communication aptes à envoyer à un dispositif destinataire un premier message et un deuxième message,
le premier message comprenant :
- un premier identifiant de service relatif à un premier service de transport de données,
- un premier ensemble de données correspondant à une configuration dudit premier service de transport de données,
le deuxième message comprenant :
- un premier identifiant de protocole relatif à un premier protocole de transmission de données,
- un deuxième ensemble de données correspondant à une configuration dudit premier protocole de transmission de données,
lesdits moyens de communication étant conçus pour envoyer séparément le premier message et le deuxième message.

Ce premier dispositif comprend des moyens de mise en oeuvre de celles des étapes du procédé selon l'invention qui sont exécutées par le dispositif émetteur.

Symétriquement, l'invention a également pour objet un dispositif accédant à un réseau de communication, comprenant
- des moyens de communication aptes à recevoir des messages émis par un dispositif émetteur et
- des moyens de traitement aptes à traiter un premier et un deuxième message reçus du dispositif émetteur,
   le premier message comprenant :
   - un premier identifiant de service relatif à un premier service de transport de données,
   - un premier ensemble de données correspondant à une configuration dudit premier service de transport de données,
   le deuxième message comprenant :
   - un premier identifiant de protocole relatif à un premier protocole de transmission de données,
   - un deuxième ensemble de données correspondant à une configuration dudit premier protocole de transmission de données,
   le premier message et le deuxième message étant reçus et traités séparément.

Ce deuxième dispositif comprend des moyens de mise en oeuvre de celles des étapes du procédé selon l'invention qui sont exécutées par le dispositif destinataire.

Les avantages énoncés pour le procédé selon l'invention sont transposables aux dispositifs émetteur et destinataire selon l'invention.

Selon l'un de ses aspects matériels, l'invention concerne un signal destiné à être émis par un dispositif émetteur et reçu par un dispositif destinataire, ledit signal véhiculant un premier message comprenant :
- un premier identifiant de service relatif à un premier service de transport de données,
- un premier ensemble de données correspondant à une configuration dudit premier service de transport de données,
ce premier message étant destiné à être envoyé séparément d'un deuxième message comprenant :
- un premier identifiant de protocole relatif à un premier protocole de transmission de données,
- un deuxième ensemble de données correspondant à une configuration dudit premier protocole de transmission de données.

Corrélativement, l'invention concerne un signal destiné à être émis par un dispositif émetteur et reçu par un dispositif destinataire, ledit signal véhiculant un premier message comprenant :
- un premier identifiant de protocole relatif à un premier protocole de transmission de données,
- un deuxième ensemble de données correspondant à une configuration dudit premier protocole de transmission de données,
ce premier message étant destiné à être envoyé séparément d'un deuxième message comprenant :
- un premier identifiant de service relatif à un premier service de transport de données,
- un premier ensemble de données correspondant à une configuration dudit premier service de transport de données.

Les dispositifs émetteur et récepteur selon l'invention sont en effet destinés à communiquer entre eux au moyen de tels signaux, porteur chacun d'un message de configuration de service, respectivement de configuration de protocole.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 est une représentation schématique d'un exemple de système convenant à la mise en oeuvre l'invention;
- la figure 2 est un ordinogramme d'un premier mode de réalisation du procédé selon l'invention;
- la figure 3 est un ordinogramme d'un deuxième mode de réalisation du procédé selon l'invention;
- la figure 4 est un ordinogramme d'un troisième mode de réalisation du procédé selon l'invention.

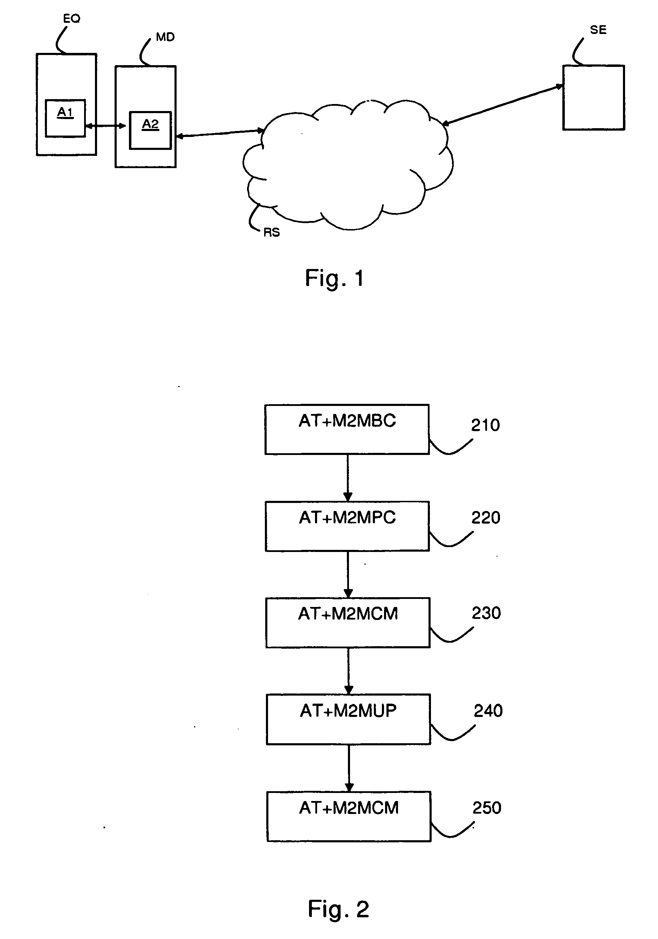

La figure 1 est une représentation schématique d'un mode de réalisation d'un système de gestion à distance d'équipements.

Ce système est articulé autour d'un réseau de télécommunication RS. Le réseau de télécommunication RS est par exemple un réseau cellulaire, de type GSM (Global System for Mobile communication), GPRS (General Packet Radio Service), UMTS (Universal Mobile Télécommunication System) ou encore un réseau IP (Internet Protocol), un réseau X25, etc. L'invention est décrite plus en détail dans le mode de réalisation dans lequel le réseau de télécommunication RS est un réseau cellulaire GSM / GPRS.

Le système de gestion à distance d'équipements représenté à la figure 1 comprend :
- un équipement EQ,
- un module de communication MD accédant au réseau RS,
- un serveur SE accédant au réseau RS.

L'équipement EQ intègre une application embarquée A1, destinée à communiquer via le réseau de télécommunication RS avec le serveur SE.

L'interaction avec l'équipement s'effectue par échanges de données entre l'application embarquée A1 et le serveur SE. Ces échanges de données peuvent s'effectuer en utilisant des communications en "mode message" (communication par messages de type commandes / réponses) ou des communications en "mode session" (communication par un flux de données).

Dans le mode de réalisation de la figure 1, l'application embarquée A1 communique avec le serveur SE par l'intermédiaire d'une application A2 du module de communication MD. Le module de communication MD sert ainsi de passerelle ou relais de communication pour l'équipement EQ, les données émises par l'application embarquée A1 et destinées au serveur SE étant routées via le module de communication MD.

Le module de communication MD et l'équipement EQ, ou plus précisément l'application A1 et l'application A2, communiquent entre eux à travers une liaison locale de communication, filaire ou non filaire. Tout type de liaison de communication permettant la transmission de données est envisageable. Dans une alternative de réalisation, le module de communication MD est intégré à l'équipement EQ.

Le module de communication MD intègre une interface de communication pour l'accès au réseau RS et une interface de communication avec l'équipement EQ. Un modem est par exemple utilisé pour l'accès au réseau. Le module de communication MD comprend en outre un module logiciel de pilotage des interfaces de communication en vue de la communication avec l'application embarquée A1 et/ou le serveur SE.

Le procédé de communication selon l'invention s'applique à la communication entre deux dispositifs ayant à communiquer en mode message. Il est décrit dans le cadre de son application à la communication entre l'équipement EQ, formant le dispositif émetteur de commandes et le module de communication MD, formant le dispositif destinataire de ces commandes, exécutant sur commande de l'équipement EQ des actions visant l'envoi ou la réception de données à travers le réseau de télécommunication RS.

L'invention se généralise à la communication par commandes entre deux dispositifs, dont l'un exécute sur commande de l'autre des actions en vue de l'accès à un réseau, de l'envoi où de la réception de données à travers de réseau de télécommunication RS.

Ces actions sont par exemple des actions relatives à un service de transport de données ou à un protocole de transmission de données, services ou protocoles disponibles dans le réseau RS.

Une action relative à un service de transport de données, est par exemple une action conforme à ce service, ou une demande d'information relative à une action conforme à ce service :
- une ouverture ou une fermeture d'une connexion ou session de communication avec un serveur pour la mise en oeuvre de ce service,
- une demande d'information sur l'état d'une connexion conforme à ce service.

Toute autre action est également envisageable.

Une action relative à un protocole de transmission de données est par exemple une action conforme à ce protocole, ou une demande d'information relative à une action conforme à ce protocole, par exemple :
a) un envoi ou une réception de message,
b) un transfert ou un téléchargement de données,
c) une demande d'interruption d'une des actions citées en a) ou b),
d) une demande d'information relative à l'une des actions citées en a) ou b)

Toute autre action est également envisageable.

Le service de transport de données utilisé pour la communication à travers le réseau RS entre le module de communication MD et le serveur SE est par exemple:
- le service de messages courts SMS (Short Message Service),
- le service supplémentaire non structuré de transmission de données USSD (Unstructered Supplementary Service Data),
- le service de transmission de données en mode circuit CSD (Circuit Switched Data) ou HSCSD (High Speed Circuit Switched Data),
- le service général de radiocommunication en mode paquet GPRS (General Packet Radio Service).

Tout autre service de transport de données adapté pour l'établissement d'une connexion en vue d'un envoi de données est également approprié.

Le protocole de transmission de données utilisé pour la communication à travers le réseau RS est par exemple :
- le protocole BEEP (Block Extensible Exchange Protocol),
- le protocole HTTP ou HTTPS (la version sécurisée de HTTP, HyperText Transfer Protocol),
- le protocole FTP, etc.

Tout autre protocole adapté pour l'envoi/réception de message ou de transfert/téléchargement de données est également approprié.

A priori un ou plusieurs protocoles est utilisable en combinaison avec chacun de ces services de transport de données en vue de l'acheminement d'un message ou de l'échange de données, dans la mesure où le protocole est compatible avec le service.

Les figures 2 à 4 illustrent différents modes de réalisation du procédé selon l'invention. Dans ces exemples, la communication se déroule entre un dispositif émetteur correspondant à l'équipement EQ et un dispositif destinataire correspondant au module de communication MD.

Les messages sont envoyés sous forme de commandes, par exemple des commandes AT. Les messages susceptibles d'être envoyés de l'application embarquée A1 à l'application A2 sont par exemple les suivants:
- un message, nommé AT+M2MBC, d'envoi de données de configuration relatives à un service de transport de données;
- un message, nommé AT+M2MPC, d'envoi de données de configuration relatives à un protocole de transmission de données;
- un message, nommé AT+M2MEP, d'envoi de données de configuration relatives à un protocole de transmission de données, en complément de données précédemment envoyées au moyen d'un message AT+M2MPC;
- un message, nommé AT+M2MCM, de commande en vue de l'exécution d'une action relative à un service de transport de données, par exemple l'ouverture ou la fermeture d'une connexion à un serveur pour la mise en oeuvre de ce service de transport de données;
- un message, nommé AT+M2MUP, de commande en vue de l'exécution d'une transmission de données de l'équipement EQ vers un dispositif distant, conformément à un protocole de transmission de données;
- un message, nommé AT+M2MDW, de commande en vue de l'exécution d'une transmission de données d'un dispositif distant vers de l'équipement EQ, conformément à un protocole de transmission de données;

Chacun de ces messages est relatif soit à un service de transport de données, soit à un protocole de transmission de données.

Chacun de ces messages est susceptible de comprendre un ou plusieurs paramètres. Ces différents paramètres sont décrits dans les tableaux 1 et 2 donnés en annexe, tableaux dans lesquels sont indiqués: le nom du paramètre, son format de donnée (nombre entier ou chaîne de caractères alphanumériques), sa signification et les valeurs possibles lorsque celles-ci sont prédéfinies. Le tableau 1 spécifie les paramètres des messages relatifs à un service de transport de données, tandis que le tableau 2 spécifie les paramètres des messages relatifs à un protocole de transmission de données

Les messages AT+M2MUP et AT+M2MDW peuvent comprendre, outre les paramètres de commande relatifs au protocole et au service, des données destinées à être transmises vers, ou respectivement, depuis un dispositif distant, par exemple le serveur SE.

A chacun de ces messages est associée une liste de paramètres, susceptibles d'être envoyés avec le message, certains de ces paramètres étant optionnels. Les messages cités plus haut comprennent les paramètres suivants, les paramètres optionnels étant indiqués entre crochets:
- message AT+M2MBC :
   Bearer, BearerConfig, AccessPoint [, Login] [, Password] [, RetryNr, Interval]
      - message AT+M2MPC :
   Protocol, ProtocolConfig, Server [, TcpPort] [, Id1] [, Id2] [, ProtocolProfile]
      - message AT+M2MEP :
   Protocol, ProtocolConfig [, Data1] [, Data2] [, ... DataN]
      - message AT+M2MCM :
   Action, Bearer, BearerConfig
      - message AT+M2MUP :
   Protocol [, ProtocolConfig] [, Encoding] [, Length] [, MsgRef] [, Id2], Message1
      - message AT+M2MDW :
Protocol [, ProtocolConfig]

Le message AT+M2MEP est utilisé par exemple pour transmettre des données de configuration relatives à un transfert de fichier au moyen du protocole FTP. Dans ce cas :
- le paramètre "Data1" donne le nom du répertoire source où se trouve le fichier à transférer,
- le paramètre "Data2" donne le nom du fichier à transférer,
- le paramètre "Data3" donne le nom du répertoire destination où doit être transféré le fichier,
- le paramètre "Data4" donne le nom du fichier destination, dans le cas où le fichier doit être renommé après transfert.

Le message AT+M2MEP est également utilisable pour envoyer d'autres types paramètres, par exemple identifiant de connexion, mot de passe, etc.

Mis à part la commande AT+M2MEP, permettant d'envoyer des données de configuration Data1, Data2, ... DataN qui sont propres à un protocole, le format des messages, c'est-à-dire la succession des paramètres contenus dans ces messages et la signification générale de ces paramètres sont prédéterminés et indépendants du service de transport ou du protocole concerné, qu'il s'agisse des paramètres obligatoires ou optionnels. En conséquence, ces messages peuvent être utilisés pour tout protocole de transmission de données ou tout service de transport de données, ils seront interprétés correctement par le dispositif destinataire.

L'interprétation des valeurs affectées à certains de ces paramètres, par exemples les paramètres Id1 et Id2 véhiculant des données d'identification et/ou d'authentification, peut dépendre du protocole utilisé, puisque la mise en oeuvre d'une transmission de données par un protocole donné nécessite des données d'identification et/ou d'authentification sous une forme souvent spécifique à ce protocole: numéro MSISDN (protocole BEEP), adresse de messagerie électronique (protocole SMTP), identifiant ou mot de passe d'utilisateur de compte d'accès à Internet (protocole FTP), etc

Comme cela va être décrit ci-dessous, l'envoi d'un message du dispositif émetteur au dispositif destinataire provoque chaque fois l'exécution d'une opération de traitement du message reçu par le dispositif destinataire.

Réciproquement, le module MD envoie, spontanément ou sur demande de l'équipement EQ, des messages vers l'équipement EQ.

Ces messages sont par exemple:
- des envois d'informations non sollicitées, par exemple sur les évènements tels que réception d'un SMS, indication sur l'état du réseau ou l'état d'une connexion au réseau, notification d'appel entrant, accusé de réception d'envoi de message, acquittement suite à l'accomplissement d'une action...
- des indications d'acquittement ou d'erreur, relatives par exemple à une réception de commande, à une tentative de connexion au réseau, à une erreur interne de fonctionnement, etc.

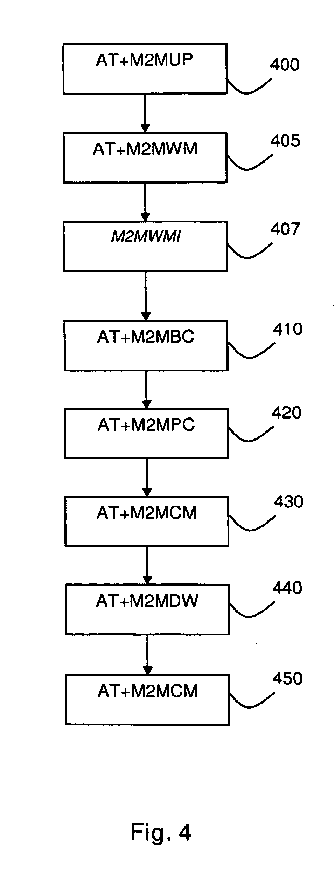

Il s'agit par exemple d'un message nommé +M2MWMI servant à notifier l'équipement EQ de l'arrivée d'un message de réveil. Le message +M2MWMI comprend la liste de paramètres suivant:
Protocol, Encoding, Id2, Date, Length.
Un exemple d'utilisation d'un tel message sera décrit plus loin au regard de la figure 4 (voir description de l'étape 407).

La figure 2 illustre un premier mode de réalisation du procédé selon l'invention. Dans cet exemple un message de type mèl est envoyé en utilisant le service de transport CSD.

A l'étape 210, un message cmd210 définissant un premier profil de configuration pour le service CSD est envoyé du dispositif émetteur au dispositif destinataire. Ce message est composé des éléments suivants:
*AT+M2MBC, 0, 0, "+33145294529"*

Ce message comprend successivement:
- un code "AT+M2MBC" identifiant la commande,
- le paramètre "Bearer" prenant la valeur "0", identifiant le service CSD (voir tableau 1),
- le paramètre "BearerConfig" prenant la valeur "0", identifiant un ensemble de données de configuration relative à un premier profil de configuration pour le service identifié, ces données de configuration étant jointes à ce même message;
- le paramètre "AccessPoint" prenant la valeur "+33145294529", faisant partie des données de configuration du service identifié et indiquant en l'occurrence le numéro du point d'accès.

L'ensemble de données de configuration se limite donc dans ce cas à un seul et unique paramètre, qui est le numéro du point d'accès.

A réception de ce message, le dispositif destinataire enregistre dans une première mémoire cet ensemble de données, en association avec l'identifiant du service et l'identifiant de l'ensemble de données. De cette manière, le dispositif destinataire est capable de restituer cet ensemble de données à partir de l'identifiant du service et l'identifiant de l'ensemble.

L'identifiant d'un ensemble de données de configuration de service est en effet destiné à être inséré par le dispositif émetteur dans un message ultérieur afin de spécifier une configuration du service à utiliser pour l'exécution d'une action relative à ce service.

A l'étape 220, un message cmd220 définissant un premier profil de configuration pour le protocole SMTP est envoyé du dispositif émetteur au dispositif destinataire. Ce message est composé des éléments suivants:
*AT+M2MPC, 2, 0, "smtp.orange.fr", 25, "device1232@mycompany.fr"; "device4323@mycompany,fr", 0*

Ce message comprend successivement:
- un code "AT+M2MPC" identifiant la commande,
- le paramètre "Protocol" prenant la valeur "2", identifiant le protocole SMTP (voir tableau 2),
- le paramètre "ProtocolConfig" prenant la valeur "0", identifiant un ensemble de données de configuration relative à un premier profil de configuration pour le protocole identifié, ces données de configuration étant jointes à cette même commande;
- le paramètre "Server" prenant la valeur "smtp.orange.fr", faisant partie des données de configuration du protocole identifié dans le message courant et indiquant l'adresse d'un serveur SMTP;
- le paramètre "TcpPort" prenant la valeur "25", faisant partie des données de configuration du protocole identifié dans le message courant et indiquant un numéro du port du serveur SMTP à utiliser;
- le paramètre "Id1" prenant la valeur "device1232@mycompany.fr", faisant partie des données de configuration du protocole identifié dans le message courant et indiquant une adresse associée à l'application A1;
- le paramètre "Id2" prenant la valeur "device4323@mycompany.fr", faisant partie des données de configuration du protocole identifié dans le message courant et indiquant une adresse d'une application d'un dispositif distant, par exemple une application du serveur SE;
- le paramètre "ProtocolProfil" prenant la valeur "0", faisant partie des données de configuration du protocole identifié dans le message courant et identifiant un profil du protocole SMTP à utiliser;

A réception de ce message, le dispositif destinataire enregistre dans une deuxième mémoire cet ensemble en association avec l'identifiant du protocole et l'identifiant de l'ensemble. De cette manière, le dispositif destinataire est capable de restituer cet ensemble de données à partir de l'identifiant du protocole et l'identifiant de l'ensemble.

L'identifiant d'un ensemble de données de configuration de protocole est en effet destiné à être inséré par le dispositif émetteur dans un message ultérieur afin de spécifier une configuration du protocole à utiliser pour l'exécution d'une action relative à ce protocole.

A l'étape 230, un message cmd230 de commande, en vue de l'exécution d'une action conforme à un service de transport de données, est envoyé du dispositif émetteur au dispositif destinataire. Ce message est composé des éléments suivants:
*AT+M2MCM, 1, 0, 0*

Ce message comprend successivement:
- un code "AT+M2MCM" identifiant la commande,
- le paramètre "Action" prenant la valeur "1 ", identifiant une action à exécuter, en l'occurrence l'ouverture d'une connexion (voir tableau 1),
- le paramètre "Bearer" prenant la valeur "0", identifiant le service CSD (voir tableau 1),
- le paramètre "BearerConfig" prenant la valeur "0", identifiant un ensemble de données de configuration, envoyé lors d'un précédent message, ces données de configuration n'étant donc pas jointes à ce message;

A réception de ce message, le dispositif destinataire recherche, dans la mémoire dans laquelle sont enregistrées les données de configuration de service, un ensemble enregistré en association avec l'identifiant de service et l'identifiant de l'ensemble fournis dans ce message. En cas de succès, il exécute l'action demandée, en l'occurrence, l'ouverture d'une connexion CSD avec le serveur identifié dans l'ensemble de données de configuration de service extrait de la mémoire.

A l'étape 240, un message cmd240 pour demander l'envoi de données, qui ici sont sous forme de texte est envoyé du dispositif émetteur au dispositif destinataire. Ce message est composé des éléments suivants:
*AT+M2MUP, 2, 0, 0, 12, 0, 0, "Hello World!"*

Ce message comprend successivement:
- un code "AT+M2MUP" identifiant la commande,
- le paramètre "Protocol" prenant la valeur "2", identifiant le protocole SMTP (voir tableau 2),
- le paramètre "ProtocolConfig" prenant la valeur "0", identifiant un ensemble de données de configuration, envoyé lors d'un précédent message, ces données de configuration n'étant donc pas jointes à ce message;
- le paramètre "Encoding" prenant la valeur "0", identifiant un format d'encodage ou de compression utilisé pour les données à transmettre;
- le paramètre "Length" prenant la valeur "12", indiquant la longueur en nombre de caractères du texte à envoyer;
- le paramètre "MsgRef" prenant la valeur "0", indiquant un numéro de référence associé aux données à transmettre;
- le paramètre "Id2" prenant la valeur "0", faisant partie des paramètres d'envoi du texte et indiquant que l'adresse du destinataire est celle définie dans la commande AT+M2MPC;
- le paramètre "Message1" prenant la valeur "Hello World!", indiquant le texte à envoyer, sous forme de chaîne de caractères alphanumériques.

A réception de ce message, le dispositif destinataire recherche, dans la mémoire dans laquelle sont enregistrées les données de configuration de protocole, un ensemble enregistré en association avec l'identifiant de protocole et l'identifiant de l'ensemble fournis dans ce message. En cas de succès, le dispositif destinataire vérifie que le service identifié dans le message précédent cmd230 est compatible avec le protocole identifié dans le message courant cmd240. En cas de compatibilité, le dispositif destinataire exécute l'action demandée, en l'occurrence l'envoi du texte, au moyen d'une connexion CSD telle qu'établie suite au message cmd230 et conformément au protocole SMTP identifié dans le message courant cmd240, dans une configuration définie par l'ensemble de données de configuration de protocole extrait de la mémoire.

A l'étape 250, un message cmd250 de commande, en vue de l'exécution d'une action conforme à un service de transport de données, est envoyé du dispositif émetteur au dispositif destinataire. Ce message est composé des éléments suivants:
AT+M2MCM, 0, 0, 0

Ce message comprend successivement:
- un code "AT+M2MCM" identifiant la commande,
- le paramètre "Action" prenant la valeur "0", identifiant une action à exécuter, en l'occurrence la fermeture d'une connexion (voir tableau 1),
- le paramètre "Bearer" prenant la valeur "0", identifiant le service CSD (voir tableau 1),
- le paramètre "BearerConfig" prenant la valeur "0", identifiant un ensemble de données de configuration, envoyé lors d'un précédent message, ces données de configuration n'étant donc pas jointes à ce message;

A réception de ce message, le dispositif destinataire recherche, dans la mémoire dans laquelle sont enregistrées les données de configuration de service, un ensemble enregistré en association avec l'identifiant de service et l'identifiant de l'ensemble fournis dans ce message. En cas de succès, il exécute l'action demandée, en l'occurrence, la fermeture de la connexion CSD établie avec le serveur identifié dans l'ensemble de données de configuration extrait de la mémoire.

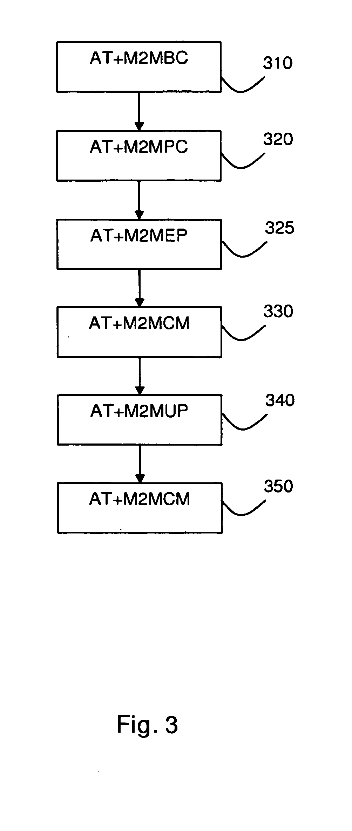

La figure 3 illustre un deuxième mode de réalisation du procédé selon l'invention. Dans cet exemple un fichier est transféré vers un serveur FTP. Le procédé se déroule de manière sensiblement identique au mode de réalisation de la figure 2, les étapes 310, 320, 330, 340 et 350 étant identiques respectivement aux étapes 210, 220, 230, 240 et 250, à la différence toutefois que les paramètres des messages envoyés sont différents.

A l'étape 310, un message cmd310 définissant un premier profil de configuration pour le service GPRS de transport de données est envoyé du dispositif émetteur au dispositif destinataire. Ce message se compose par exemple comme suit:
*AT+M2MBC, 2, 0, "orange.fr", "orange", "orange"*

Ce message comprend successivement:
- un code "AT+M2MBC" identifiant la commande,
- le paramètre "Bearer" prenant la valeur "2", identifiant le service GPRS (voir tableau 1),
- le paramètre "BearerConfig" prenant la valeur "0", identifiant un ensemble de données de configuration relative à un premier profil de configuration pour le service identifié, ces données de configuration étant jointes à ce même message;
- le paramètre "AccessPoint" prenant la valeur "orange.fr", faisant partie des données de configuration du service identifié et indiquant en l'occurrence le nom du serveur servant de point d'accès,
- le paramètre "Login" prenant la valeur "orange" faisant partie des données de configuration du service identifié et indiquant en l'occurrence un identifiant ou login de connexion;
- le paramètre "Password" prenant la valeur "orange" faisant partie des données de configuration du service identifié et indiquant en l'occurrence un mot de passe;

A réception de ce message, le dispositif destinataire enregistre dans la première mémoire l'ensemble des données de configuration de service, en association avec l'identifiant du service et l'identifiant de l'ensemble.

A l'étape 320, un message cmd320 définissant un premier profil de configuration pour le protocole FTP est envoyé du dispositif émetteur au dispositif destinataire. Ce message est composé des éléments suivants:
*AT+M2MPC, 4, 0, "ftp,orange.fr", 21, "anonymous", "anonymous@", 0*

Ce message comprend successivement:
- un code "AT+M2MPC" identifiant la commande,
- le paramètre "Protocol" prenant la valeur "4", identifiant le protocole FTP (voir tableau 2),
- le paramètre "ProtocolConfig" prenant la valeur "0", identifiant un ensemble de données de configuration relative à un premier profil de configuration pour le protocole identifié, ces données de configuration étant jointes à cette même commande;
- le paramètre "Server" prenant la valeur "ftp.orange.fr", faisant partie des données de configuration du protocole identifié dans le message courant et indiquant l'adresse d'un serveur FTP;
- le paramètre "TcpPort" prenant la valeur "21", faisant partie des données de configuration du protocole identifié dans le message courant et indiquant un numéro du port du serveur FTP à utiliser;
- le paramètre "Id1" prenant la valeur "anonymous", faisant partie des données de configuration du protocole identifié dans le message courant et indiquant un login FTP;
- le paramètre "Id2" prenant la valeur "anonymous@", faisant partie des données de configuration du protocole identifié dans le message courant et indiquant un mot de passe FTP;
- le paramètre "ProtocolProfil" prenant la valeur "0", faisant partie des données de configuration du protocole identifié dans le message courant et identifiant un profil du protocole FTP à utiliser;

A réception de ce message, le dispositif destinataire enregistre dans la deuxième mémoire cet ensemble de données, en association avec l'identifiant du protocole et l'identifiant de l'ensemble.

A l'étape 325, un message cmd325 définissant des données complémentaires de configuration pour le protocole FTP est envoyé du dispositif émetteur au dispositif destinataire. Ce message est composé des éléments suivants:
*AT+M2MEP, 4, 0, _ , _ , "*/*list", "readme.txt";*

Ce message comprend successivement:
- un code "AT+M2MEP" identifiant la commande,
- le paramètre "Protocol" prenant la valeur "4", identifiant le protocole FTP (voir tableau 2),
- le paramètre "ProtocolConfig" prenant la valeur "0", identifiant d'un ensemble de données de configuration, envoyé lors d'un précédent message, ces données de configuration n'étant donc pas jointes à ce message;
- les paramètres "Data1" et Data2" sont ici omis (ce qui est signifié au moyen du caractère "_"), car ils ne sont pas nécessaires pour l'opération de transmission de données à suivre, qui sera exécutée à l'étape 340;
- le paramètre "Data3" prenant la valeur "/list", faisant partie des données complémentaires de configuration du protocole identifié dans le message courant et indiquant le répertoire dans lequel le fichier doit être transféré;
- le paramètre "Data4" prenant la valeur "readme.txt", faisant partie des données complémentaires de configuration du protocole identifié dans le message courant et indiquant le nom du fichier à transférer.

A réception de ce message, le dispositif destinataire enregistre dans la deuxième mémoire cet ensemble de données complémentaires, en association avec l'identifiant du protocole et l'identifiant de l'ensemble.

A l'étape 330, un message cmd330 de commande, en vue de l'exécution d'une action conforme au service de transport de données GPRS, est envoyé du dispositif émetteur au dispositif destinataire. Ce message est composé des éléments suivants:
*AT+M2MCM 1, 2, 0*

Ce message comprend successivement:
- un code "AT+M2MCM" identifiant la commande,
- le paramètre "Action" prenant la valeur "1 ", identifiant une action à exécuter, en l'occurrence l'ouverture d'une connexion (voir tableau 1),
- le paramètre "Bearer" prenant la valeur "2", identifiant le service GPRS (voir tableau 1),
- le paramètre "BearerConfig" prenant la valeur "0", identifiant un ensemble de données de configuration, envoyé lors d'un précédent message, ces données de configuration n'étant donc pas jointes à ce message;

A réception de ce message, le dispositif destinataire recherche, dans la mémoire dans laquelle sont enregistrées les données de configuration de service, un ensemble enregistré en association avec l'identifiant de service et l'identifiant de l'ensemble fournis dans ce message. En cas de succès, il exécute l'action demandée, en l'occurrence, l'ouverture d'une connexion GPRS avec le serveur identifié dans l'ensemble de données de configuration de service extrait de la mémoire.

A l'étape 340, un message cmd340 pour demander l'envoi d'un fichier. Ce message est composé des éléments suivants:
*A T+M2MUP, 4, 0, 3,250, 0,* 0

Ce message comprend successivement:
- un code "AT+M2MUP" identifiant la commande,
- le paramètre "Protocol" prenant la valeur "4", identifiant le protocole FTP (voir tableau 2),
- le paramètre "ProtocolConfig" prenant la valeur "0", identifiant un ensemble de données de configuration, envoyé lors d'un précédent message, ces données de configuration n'étant donc pas jointes à ce message;
- le paramètre "Encoding" prenant la valeur "3", indiquant un mode d'encodage ou de compression du fichier;
- le paramètre "Length" prenant la valeur "250", indiquant la longueur en nombre d'octets du fichier;
- le paramètre "MsgRef" prenant la valeur "0", indiquant une référence associée au message;
- le paramètre "Id2" prenant la valeur "0", faisant partie des paramètres d'envoi du fichier et indiquant que l'adresse de destination pour l'envoi du fichier est celle envoyée avec la commande AT+M2MEP.

A réception de ce message, le dispositif destinataire recherche, dans la mémoire dans laquelle sont enregistrées les données de configuration de protocole, un ensemble enregistré en association avec l'identifiant de protocole et l'identifiant de l'ensemble de données fournis dans ce message. Il recherche également s'il existe un ensemble de données complémentaires enregistré en association avec l'identifiant de protocole et l'identifiant de l'ensemble fournis dans ce message. En cas d'obtention d'un ensemble de données de configuration, le dispositif destinataire vérifie que le service identifié dans le message précédent cmd330 est compatible avec le protocole identifié dans le message courant cmd340.

En cas de compatibilité, le dispositif destinataire exécute l'action demandée, en l'occurrence l'envoi du texte, au moyen d'une connexion GPRS telle qu'établie suite au message cmd330 et conformément au protocole FTP identifié dans le message courant cmd340, dans une configuration définie par l'ensemble de données de configuration de protocole extrait de la mémoire, et en tenant compte de l'ensemble de données complémentaires envoyées avec le message cmd320, qui, dans le cas d'un transfert FTP, identifie le fichier à transférer.

A l'étape 350, un message cmd350 de commande, en vue de l'exécution d'une action relative à un service de transport de données, est envoyé du dispositif émetteur au dispositif destinataire. Ce message est composé des éléments suivants:
AT+M2MCM, 0, 2, 0

Ce message comprend successivement:
- un code "AT+M2MCM" identifiant la commande,
- le paramètre "Action" prenant la valeur "0", identifiant une action à exécuter, en l'occurrence la fermeture d'une connexion (voir tableau 1),
- le paramètre "Bearer" prenant la valeur "2", identifiant le service GPRS (voir tableau 1),
- le paramètre "BearerConfig" prenant la valeur "0", identifiant un ensemble de données de configuration, envoyé lors d'un précédent message, ces données de configuration n'étant donc pas jointes à ce message;

A réception de ce message, le dispositif destinataire recherche, dans la mémoire dans laquelle sont enregistrées les données de configuration de service, un ensemble enregistré en association avec l'identifiant de service et l'identifiant de l'ensemble fournis dans ce message. En cas de succès, il exécute l'action demandée, en l'occurrence, la fermeture de la connexion GPRS établie avec le serveur identifié dans l'ensemble de données de configuration extrait de la mémoire.

La figure 4 illustre un troisième mode de réalisation du procédé selon l'invention. Dans cet exemple un message SMS est envoyé sur demande du dispositif émetteur. Ensuite celui-ci reçoit un message UGPRS (accompagné d'un message de réveil) et le télécharge en utilisant le service GPRS et le protocole BEEP. Le procédé se déroule de manière sensiblement identique au mode de réalisation de la figure 2, les étapes 410, 420, 430, 440 et 450 étant identiques respectivement aux étapes 210, 220, 230, 240 et 250, à la différence toutefois que les paramètres des messages envoyés sont différents.

A l'étape 400, un message cmd400 pour demander l'envoi de données sous forme de texte en utilisant le service SMS. Ce message est composé des éléments suivants:
*A T+M2MUP, 0, 0, 0, 12, 0, 0, "Hello World!"*

Ce message comprend successivement:
- un code "AT+M2MUP" identifiant la commande,
- le paramètre "Protocol" prenant la valeur "0", identifiant le protocole SMS (voir tableau 2),
- le paramètre "ProtocolConfig" prenant la valeur "0", identifiant un ensemble de données de configuration, envoyé lors d'un précédent message, ces données de configuration n'étant donc pas jointes à ce message;
- le paramètre "Encoding" prenant la valeur "0", indiquant un format d'encodage ou de compression pour les données à transmettre;
- le paramètre "Length" prenant la valeur "12", indiquant la longueur en nombre d'octets des données à envoyer;
- le paramètre "MsgRef" prenant la valeur "0", indiquant une référence associée aux données à transmettre;
- le paramètre "Id2" prenant la valeur "0", indiquant que l'adresse de destination pour l'envoi du fichier est celle envoyée avec la commande AT+M2MPC;
- le paramètre "Message1" prenant la valeur "Hello World!", indiquant le texte à envoyer, sous forme de chaîne de caractères alphanumériques.

Dans le cas d'une communication au moyen du service SMS, il n'est pas nécessaire l'établir une session de communication préalablement à l'envoi du message. Dans ce cas particulier, la définition du protocole est incluse dans celle du service de transport de données. En conséquence les paramètres de configuration du service de transport associé peuvent être omis, le service SMS étant assimilable à un protocole. Dans ce cas, le dispositif destinataire n'a pas besoin de vérifier une compatibilité entre un protocole et un service.

A réception de ce message, le dispositif destinataire recherche, dans la mémoire dans laquelle sont enregistrées les données de configuration de protocole, un ensemble enregistré en association avec l'identifiant de protocole et l'identifiant de l'ensemble fournis dans ce message.

En cas d'obtention d'un tel ensemble, le dispositif destinataire exécute l'action demandée, en l'occurrence l'envoi du message, au moyen du service SMS dans une configuration définie par l'ensemble de données de configuration de protocole extrait de la mémoire.

A l'étape 405, un message cmd405 pour demander la configuration d'une fonction de réveil de l'équipement EQ. Ce message est composé des éléments suivants:
*AT+M2MWM, 1, "+33612341234"*

Ce message comprend successivement:
- un code "AT+ *M2MWM"* identifiant la commande,
- le paramètre "1 ", identifiant que l'on active une fonction de réveil,
- le paramètre *"+33612341234",* identifiant l'adresse de l'entité autorisée à envoyer des messages de réveil, seul les messages en provenance de cette adresse étant pris en compte pour la mise en oeuvre de la fonction de réveil.

A l'étape 407, un message cmd407 de notification est envoyé du module MD à l'équipement EQ. Il s'agit d'une notification indiquant la disponibilité sur un serveur distant de données destinées à l'équipement EQ. Ce message de notification est envoyé spontanément par le module MD à l'équipement EQ, suite à la réception par le module MD d'un message de réveil en provenant d'une entité. Ce message cmd 407 se compose comme suit:
*M2MWMI, 1, 0, "+33612341234", "01119*/*2006",314*

Ce message cmd407 comprend successivement:
- un code *" M2MWMI* " identifiant une commande de notification suite à un message de réveil,
- un paramètre "Protocol" prenant la valeur "1", identifiant le protocole à utiliser pour le chargement des données destinées à l'équipement;
- un paramètre "Encoding" prenant la valeur "0", indiquant le format d'encodage des données destinées à l'équipement;
- un paramètre "Id2" prenant la valeur "+33612341234", identifiant l'entité ayant envoyé le message de réveil;
- un paramètre "Date" prenant la valeur "01/19/2006", indiquant la date à partir de laquelle les données sont disponibles sur le serveur;
- un paramètre "Length" prenant la valeur "314", indiquant la longueur en octet des données destinées à l'équipement.

A l'étape 410, suite à la notification de l'étape 407, un message cmd410 définissant un premier profil de configuration pour le service GPRS de transport de données est envoyé du dispositif émetteur au dispositif destinataire. Ce message se compose par exemple comme suit:
*AT+M2MBC, 2, 0, "m2m.orange.co.uk", "m2mconnect", "m2mconnect", 5, 60*

Ce message comprend successivement:
- un code "AT+M2MBC" identifiant la commande,
- le paramètre "Bearer" prenant la valeur "2", identifiant le service GPRS (voir tableau 1),
- le paramètre "BearerConfig" prenant la valeur "0", identifiant un ensemble de données de configuration relative à un premier profil de configuration pour le service identifié, ces données de configuration étant jointes à ce même message;
- le paramètre "AccessPoint" prenant la valeur *"m2m.orange.co.uk",* faisant partie des données de configuration du service identifié et indiquant en l'occurrence le nom du serveur servant de point d'accès,
- le paramètre "Login" prenant la valeur *"m2mconnect"* faisant partie des données de configuration du service identifié et indiquant en l'occurrence un identifiant ou login de connexion;
- le paramètre "Password" prenant la valeur *"m2mconnect"* faisant partie des données de configuration du service identifié et indiquant en l'occurrence un mot de passe;
- le paramètre "RetryNr" prenant la valeur *"5'* faisant partie des données de configuration du service identifié et indiquant le nombre de tentatives de connexion pour l'établissement d'une connexion conforme au service identifié dans le message courant;
- le paramètre "Interval" prenant la valeur *"60"* faisant partie des données de configuration du service identifié et indiquant la durée en secondes de l'intervalle de temps entre deux tentatives de connexion;

A réception de ce message, le dispositif destinataire enregistre dans la première mémoire l'ensemble des données de configuration de service, en association avec l'identifiant du service et l'identifiant de l'ensemble.

A l'étape 420, un message cmd420 définissant un premier profil de configuration pour le protocole BEEP est envoyé du dispositif émetteur au dispositif destinataire. Ce message est composé des éléments suivants:
*AT+M2MPC, 1, 0, "10.168.50.75", "10288'b "+33656785678'b "+336 1234 1255", 0*

Ce message comprend successivement:
- un code "AT+M2MPC" identifiant la commande,
- le paramètre "Protocol" prenant la valeur "1", identifiant le protocole BEEP (voir tableau 2),
- le paramètre "ProtocolConfig" prenant la valeur "0", identifiant un ensemble de données de configuration relative à un premier profil de configuration pour le protocole identifié, ces données de configuration étant jointes à cette même commande;
- le paramètre "Server" prenant la valeur *"10.168.50.75",* faisant partie des données de configuration du protocole identifié dans le message courant et indiquant l'adresse IP d'un serveur BEEP;
- le paramètre "TcpPort" prenant la valeur *"10288",* faisant partie des données de configuration du protocole identifié dans le message courant et indiquant un numéro du port du serveur BEEP à utiliser;
- le paramètre "Id1" prenant la valeur *"+33656785678",* faisant partie des données de configuration du protocole identifié dans le message courant et indiquant le numéro MSISDN de l'application A1 émettrice;
- le paramètre "Id2" prenant la valeur *"+33612341255',* faisant partie des données de configuration du protocole identifié dans le message courant et le numéro MSISDN d'une application destinataire, mise en oeuvre par exemple dans le serveur SE;
- le paramètre "ProtocolProfil" prenant la valeur "0", faisant partie des données de configuration du protocole identifié dans le message courant et identifiant un profil du protocole BEEP à utiliser.

A réception de ce message, le dispositif destinataire enregistre dans la deuxième mémoire cet ensemble de données, en association avec l'identifiant du protocole et l'identifiant de l'ensemble.

A l'étape 430, un message cmd430 de commande, en vue de l'exécution d'une action conforme au service de transport de données GPRS, est envoyé du dispositif émetteur au dispositif destinataire. Ce message est composé des éléments suivants:
*AT+M2MCM, 1, 2, 0*

Ce message comprend successivement:
- un code "AT+M2MCM" identifiant la commande,
- le paramètre "Action" prenant la valeur "1", identifiant une action à exécuter, en l'occurrence l'ouverture d'une connexion (voir tableau 1),
- le paramètre "Bearer" prenant la valeur "2", identifiant le service GPRS (voir tableau 1),
- le paramètre "BearerConfig" prenant la valeur "0", identifiant un ensemble de données de configuration, envoyé lors d'un précédent message, ces données de configuration n'étant donc pas jointes à ce message;

A réception de ce message, le dispositif destinataire recherche, dans la mémoire dans laquelle sont enregistrées les données de configuration de service, un ensemble enregistré en association avec l'identifiant de service et l'identifiant de l'ensemble fournis dans ce message. En cas de succès, il exécute l'action demandée, en l'occurrence, l'ouverture d'une connexion GPRS avec le serveur identifié dans l'ensemble de données de configuration de service extrait de la mémoire.

A l'étape 440, un message cmd440 pour demander la réception de données via le protocole BEEP. Ce message est composé des éléments suivants:
*AT+M2MDW, 1, 0*

Ce message comprend successivement:
- un code "AT+M2MDW" identifiant la commande,
- le paramètre "Protocol" prenant la valeur "1", identifiant le protocole BEEP (voir tableau 2),
- le paramètre "ProtocolConfig" prenant la valeur "0", identifiant un ensemble de données de configuration, envoyé lors d'un précédent message, ces données de configuration n'étant donc pas jointes à ce message;

A réception de ce message, le dispositif destinataire recherche, dans la mémoire dans laquelle sont enregistrées les données de configuration de protocole, un ensemble enregistré en association avec l'identifiant de protocole et l'identifiant de l'ensemble fournis dans ce message. En cas d'obtention d'un ensemble de données de configuration, le dispositif destinataire vérifie que le service identifié dans le message précédent cmd430 est compatible avec le protocole identifié dans le message courant cmd440.

En cas de compatibilité, le dispositif destinataire exécute l'action demandée, en l'occurrence le téléchargement du message, au moyen d'une connexion GPRS telle qu'établie suite au message cmd430 et conformément au protocole BEEP identifié dans le message courant cmd440, dans une configuration définie par l'ensemble de données de configuration de protocole extrait de la mémoire.

A l'étape 450, un message cmd450 de commande, en vue de l'exécution d'une action relative à un service de transport de données, est envoyé du dispositif émetteur au dispositif destinataire. Ce message est composé des éléments suivants:
AT+M2MCM, 0, 2, 0

Ce message comprend successivement:
- un code "AT+M2MCM" identifiant la commande,
- le paramètre "Action" prenant la valeur "0", identifiant une action à exécuter, en l'occurrence la fermeture d'une connexion (voir tableau 1),
- le paramètre "Bearer" prenant la valeur "2", identifiant le service GPRS (voir tableau 1),
- le paramètre "BearerConfig" prenant la valeur "0", identifiant un ensemble de données de configuration, envoyé lors d'un précédent message, ces données de configuration n'étant donc pas jointes à ce message;

A réception de ce message, le dispositif destinataire recherche, dans la mémoire dans laquelle sont enregistrées les données de configuration de service, un ensemble enregistré en association avec l'identifiant de service et l'identifiant de l'ensemble fournis dans ce message. En cas de succès, il exécute l'action demandée, en l'occurrence, la fermeture de la connexion GPRS établie avec le serveur identifié dans l'ensemble de données de configuration extrait de la mémoire.

De préférence, les différentes étapes du procédé selon l'invention sont mises en oeuvre au moyen d'instructions de programmes et exécutées par un processeur de données du dispositif émetteur (équipement EQ) et un processeur de données du dispositif destinataire (modem MD), processeurs faisant appel à des programmes ou sous-programmes conçus pour l'exécution des différentes étapes de ce procédé mises en oeuvre respectivement par le dispositif émetteur et le dispositif destinataire.

En conséquence, l'invention vise aussi un programme, de type programme d'ordinateur, enregistré sur un support d'informations, ce programme étant susceptible d'être mis en oeuvre par un processeur de données, ce programme comportant des instructions adaptées à la mise en oeuvre des étapes du procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention permet de découpler la configuration du service de transport de données de la configuration du protocole. Une fois la connexion de communication établie, n'importe quel protocole compatible avec cette liaison peut être utilisé, les données étant envoyées ou reçues sans qu'il soit nécessaire de s'occuper de la connexion. Il en résulte une simplification de la communication.

Cette invention est applicable à tous les systèmes de communication de machine à machine. Elle fournit une solution générique de communication, un modem pouvant facilement être remplacé par un autre.

Elle s'applique aussi non seulement à la communication entre un équipement et un modem dans le cadre d'une application M2M, mais plus généralement à tout dispositif émetteur, communicant avec un dispositif destinataire, ce dispositif destinataire accédant à un réseau de communication et exécutant pour le compte du dispositif émetteur des accès au réseau et actions de communication à travers le réseau.

Elle permet tout type de communication, envoi de messages SMS, envoi de courrier électronique de type mèl, transfert de fichier FTP, ou tout autre transfert de données, et ce avec un jeu de messages limité, un même message étant utilisable pour envoyer un message SMS ou un message GPRS.

### ANNEXE

**TABLEAU 1**

| Nom du paramètre | Format | Valeurs possibles | Signification |
|---|---|---|---|
| Bearer | Nombre entier | 0 - CSD | Identifiant d'un service de transport de données; de préférence les valeurs possibles sont prédéfinies et associées chacune à un service prédéfini |
| | | 1 - SMS | |
| | | 2 - GPRS | |
| | | 3 - EDGE | |
| | | 4- UMTS | |
| BearerConfig | Nombre entier | 0 à N | Identifiant d'un ensemble de données de configuration relatives à une configuration possible d'un service de transport de données |
| | | 0 pour le service par défaut | |
| AccessPoint | chaîne de caractères | | Identification du point d'accès au réseau permettant d'établir une connexion conforme à un service, sous forme de nom du point d'accès ou de numéro de téléphone; dans le cas du service SMS, le numéro MSISDN du centre serveur de message est indiqué; |
| Login | chaîne de caractères | | Identifiant ou login à utiliser pour l'établissement d'une connexion conforme à un service de transport de données; dans le cas d'un SMS, le numéro MSISDN de la carte SIM du modem ou du dispositif à l'origine de la demande de connexion est indiqué. |
| Password | chaîne de caractères | | Mot de passe à utiliser en cas d'authentification lors de l'établissement d'une connexion conforme à un service de transport de données |
| RetryNr | Nombre entier | >= 1 | Nombre de tentatives de connexion lors de l'établissement d'une connexion conforme à un service de transport de données; |
| | | Valeur 1 par défaut | |
| Interval | Nombre entier | >=1 | Intervalle de temps exprimé en secondes |
| | | Valeur 30 par défaut | entre deux tentatives de connexion lors de l'établissement d'une connexion conforme à un service de transport de données; |
| Action | Nombre entier | 1= ouverture | Identifiant d'une action à exécuter conforme à un service de transport de données |
| | | de connexion | |
| | | 0= fermeture | |
| | | de connexion | |

**TABLEAU 2**

| Nom du paramètre | Format | Valeurs possibles | Signification |
|---|---|---|---|
| Protocol | Nombre entier | 0 - SMS | Identifiant d'un protocole de transmission de données; de préférence les valeurs possibles sont prédéfinies et associées chacune à un protocole prédéfini |
| | | 1 - BEEP | |
| | | 2 - SMTP | |
| | | 3 - POP | |
| | | 4-FTP | |
| | | 5 - HTTP | |
| ProtocolConfig | Nombre entier | 0 à N | Identifiant d'un ensemble de données de |
| | | 0 pour le protocole par défaut | configuration relatives à une configuration possible d'un protocole de transmission de données |
| Server | chaîne de caractères | | Adresse IP ou nom du serveur distant utilisé pour la transmission de données |
| TcpPort | Nombre entier | | Numéro de port TCP pour la connexion au serveur distant identifié par le paramètre "Server" |
| Id1 | chaîne de caractères | | Donnée d'identification ou d'authentification relative à un compte utilisateur et/ou un dispositif; par exemple: numéro MSISDN de carte SIM de terminal (BEEP); adresse de messagerie électronique (SMTP); login de compte utilisateur (FTP); |
| Id2 | chaîne de caractères | | Donnée d'identification ou d'authentification relative à un compte utilisateur et/ou un dispositif; par exemple: numéro MSISDN de carte SIM de terminal (BEEP); adresse de messagerie électronique (SMTP); mot de passe de compte utilisateur (FTP); |
| ProtocolProfile | chaîne de caractères | | Profil du protocole à utiliser, notamment dans le cas du protocole BEEP; dans le cas du protocole HTTP le profil est GET ou POST; dans le cas du protocole FTP, le profil est 0 pour un transfert en mode ASCII et 1 pour un transfert en mode binaire; |
| Data1, Data2; ... DataN | chaîne de caractères ou nombre entier | | Données de configuration supplémentaires propres à un protocole de transmission de données. |
| Encoding | | | identifiant d'un format d'encodage ou de compression des données à transmettre |
| Length | | | Longueur en octet des données à transmettre |
| MsgRef | | | référence associée aux données à transmettre |
| Message1 | chaîne de caractères | | Contenu d'un message à transmettre selon un protocole de transmission de données |

## Revendications

1. Procédé de communication entre un dispositif émetteur et un dispositif destinataire, comprenant
- une étape (210; 310; 410) de transmission, depuis le dispositif émetteur vers le dispositif destinataire, d'un premier message comprenant :
- un premier identifiant de service relatif à un premier service de transport de données,
- un premier ensemble de données correspondant à une configuration dudit premier service de transport de données,
- une étape (220; 320; 420) de transmission, depuis le dispositif émetteur vers le dispositif destinataire, d'un deuxième message,
le premier message et le deuxième message étant envoyés séparément,
le procédé étant **caractérisé en ce que** le deuxième message comprend:
- un premier identifiant de protocole relatif à un premier protocole de transmission de données utilisable avec le premier service de transport de données,
- un deuxième ensemble de données correspondant à une configuration dudit premier protocole de transmission de données.

2. Procédé selon la revendication 1, dans lequel le format du premier message est indépendant du service de transport de données identifié par le premier identifiant de service.

3. Procédé selon la revendication 1 ou 2, dans lequel le format du deuxième message est indépendant du protocole de transmission de données identifié par le premier identifiant de protocole.

4. Procédé selon l'une quelconque des revendications 1 à 3, le premier message comprenant un premier identifiant d'ensemble de données,
le procédé comprenant une étape d'enregistrement, par le dispositif destinataire, dans une première mémoire, dudit premier ensemble de données en association avec ledit premier identifiant de service et avec ledit premier identifiant d'ensemble de données.

5. Procédé selon l'une quelconque des revendications 1 à 4, le deuxième message comprenant un deuxième identifiant d'ensemble de données,
le procédé comprenant une étape d'enregistrement, par le dispositif destinataire dans une deuxième mémoire, dudit deuxième ensemble de données en association avec ledit premier identifiant de protocole et avec ledit deuxième identifiant d'ensemble de données.

6. Procédé selon l'une quelconque des revendications 1 à 5, comprenant une étape (230; 330; 430) de transmission, depuis le dispositif émetteur vers le dispositif destinataire, en vue de l'exécution d'une première action relative à un deuxième service de transport de données, d'un troisième message comprenant un deuxième identifiant de service relatif audit deuxième service de transport de données et un premier identifiant d'action relatif à ladite première action.
- une étape d'exécution par le dispositif destinataire de ladite première action.

7. Procédé selon l'une quelconque des revendications 1 à 6, comprenant une étape (240; 340; 440) de transmission, depuis le dispositif émetteur vers le dispositif destinataire, en vue de l'exécution d'une deuxième action relative à un deuxième protocole de transmission de données, d'un quatrième message comprenant un deuxième identifiant de protocole relatif audit deuxième protocole de transmission de données et un deuxième identifiant d'action relatif à ladite deuxième action.
- une étape d'exécution par le dispositif destinataire de ladite deuxième action.

8. Procédé selon la revendication 6 ou 7, comprenant, une étape de vérification, par le dispositif destinataire, de la compatibilité entre le protocole de transmission de données identifié par le deuxième identifiant de protocole et le service de transport de données identifié par le deuxième identifiant de service, ladite étape d'exécution de la deuxième action étant destinée à être exécutée sous condition de compatibilité.

9. Dispositif (EQ), comprenant des moyens de communication aptes à envoyer à un dispositif destinataire un premier message et un deuxième message, lesdits moyens de communication étant conçus pour envoyer séparément le premier message et le deuxième message,
le premier message comprenant :
- un premier identifiant de service relatif à un premier service de transport de données,
- un premier ensemble de données correspondant à une configuration dudit premier service de transport de données,
le dispositif étant **caractérisé en ce que** deuxième message comprend :
- un premier identifiant de protocole relatif à un premier protocole de transmission de données, utilisable avec le premier service de transport de données,
- un deuxième ensemble de données correspondant à une configuration dudit premier protocole de transmission de données.

10. Dispositif (MD) accédant à un réseau de communication, comprenant
- des moyens de communication aptes à recevoir (210; 310; 410) des messages émis par un dispositif émetteur et
- des moyens de traitement aptes à traiter un premier et un deuxième message reçus du dispositif émetteur,
le premier message et le deuxième message étant reçus et traités séparément,
le premier message comprenant :
- un premier identifiant de service relatif à un premier service de transport de données,
- un premier ensemble de données correspondant à une configuration dudit premier service de transport de données,
le dispositif étant **caractérisé en ce que** deuxième message comprend :
- un premier identifiant de protocole relatif à un premier protocole de transmission de données, utilisable avec le premier service de transport de données,
- un deuxième ensemble de données correspondant à une configuration dudit premier protocole de transmission de données.

11. Ensemble de deux signaux, comprenant un premier signal et un deuxième signal, le premier signal étant destiné à être émis par un dispositif émetteur et reçu par un dispositif destinataire,
ledit premier signal véhiculant un premier message comprenant :
- un premier identifiant de service relatif à un premier service de transport de données,
- un premier ensemble de données correspondant à une configuration dudit premier service de transport de données,
le deuxième signal étant destiné à être émis par le dispositif émetteur et reçu par le dispositif destinataire, le deuxième signal véhiculant un deuxième message,
le premier message étant destiné à être envoyé séparément du deuxième message,
l'ensemble de deux signaux étant **caractérisé en ce que** le deuxième message comprend:
- un premier identifiant de protocole relatif à un premier protocole de transmission de données, utilisable avec le premier service de transport de données,
- un deuxième ensemble de données correspondant à une configuration dudit premier protocole de transmission de données.

## Claims

1. Method of communication between a sending device and a recipient device,
comprising
- a step (210; 310; 410) for transmission, from the sending device to the recipient device, of a first message comprising:
- a first service identifier relating to a first data transport service,
- a second data set corresponding to a configuration of said first data transport service,
- a step (220; 320; 420) for transmission, from the sending device to the recipient device, of a second message
said first message and a second message being sent separately,
the method being **characterized in that** the second message comprises:
- a first protocol identifier relating to a first data transmission protocol usable with the first data transport service,
- a second data set corresponding to a configuration of said first data transmission protocol.

2. Method according to Claim 1, wherein the format of the first message is independent of the data transport service identified by the first service identifier.

3. Method according to Claim 1 or 2, wherein the format of the second message is independent of the data transmission protocol identified by the first protocol identifier.

4. Method according to any one of Claims 1 to 3, the first message comprising a first data set identifier,
the method comprising a step for storage, by the recipient device, in a first memory, of said first data set in association with said first service identifier and with said first data set identifier.

5. Method according to any one of Claims 1 to 4, the second message comprising a second data set identifier, the method comprising a step for storage, by the recipient device in a second memory, of said second data set in association with said first protocol identifier and with said second data set identifier.

6. Method according to any one of Claims 1 to 5, comprising a step (230; 330; 430) for transmission, from the sending device to the recipient device, in order to have a first action executed relating to a second data transport service, of a third message comprising a second service identifier relating to said second data transport service and a first action identifier relating to said first action,
- a step for execution by the recipient device of said first action.

7. Method according to any one of Claims 1 to 6, comprising a step (240; 340; 440) for transmission, from the sending device to the recipient device, in order to have a second action executed relating to a second data transmission protocol, of a fourth message comprising a second protocol identifier relating to said second data transmission protocol and a second action identifier relating to said second action,
- a step for execution by the recipient device of said second action.

8. Method according to Claim 6 or 7, comprising a step for verification, by the recipient device, of the compatibility between the data transmission protocol identified by the second protocol identifier and the data transport service identified by the second service identifier, said step for execution of the second action being intended to be executed subject to a compatibility condition.

9. Device (EQ), comprising communication means capable of sending to a recipient device a first message and a second message,
said communication means being designed to send the first message and the second message separately,
the first message comprising:
- a first service identifier relating to a first data transport service,
- a first data set corresponding to a configuration of said first data transport service,
said device being **characterized in that** the second message comprises:
- a first protocol identifier relating to a first data transmission protocol usable with the first data transport service,
- a second data set corresponding to a configuration of said first data transmission protocol.

10. Device (MD) accessing a communication network, comprising
- communication means capable of receiving (210; 310; 410) messages sent by a sending device, and
- processing means capable of processing a first and a second message received from the sending device,
the first message and the second message being received and processed separately,
the first message comprising:
- a first service identifier relating to a first data transport service,
- a first data set corresponding to a configuration of said first data transport service,
said device being **characterized in that** the second message comprises:
- a first protocol identifier relating to a first data transmission protocol usable with the first data transport service,
- a second data set corresponding to a configuration of said first data transmission protocol.

11. Set of two signals comprising a first signal and a second signal,
wherein the first signal is intended to be sent by a sending device and received by a recipient device, said first signal conveying a first message comprising:
- a first protocol identifier relating to a first data transmission protocol,
- a second data set corresponding to a configuration of said first data transmission protocol, and
wherein the second signal is intended to be sent by a sending device and received by a recipient device, the second signal conveying a second message,
said first message being intended to be sent separately from the second message,
the set of two signals being **characterized in that** the second signal comprises:
- a first service identifier relating to a first data transport service usable with the first data transport service,
- a first data set corresponding to a configuration of said first data transport service.

## Patentansprüche

1. Verfahren zur Kommunikation zwischen einer Sendevorrichtung und einer Empfangsvorrichtung, , das enthält
- einen Schritt (210; 310; 410) der Übertragung, von der Sendevorrichtung zur Empfangsvorrichtung, einer ersten Mitteilung, die enthält:
- eine erste Dienstkennung bezüglich eines ersten Datentransportdiensts,
- eine erste Datengruppe, die einer Konfiguration des ersten Datentransportdiensts entspricht,
- einen Schritt (220; 320; 420) der Übertragung, von der Sendevorrichtung zur Empfangsvorrichtung, einer zweiten Mitteilung,:
wobei eine erste Mitteilung und eine zweite Mitteilung getrennt gesendet werden,
wobei das Verfahren **dadurch gekennzeichnet ist, dass** die zweite Mitteilung enthält :
- eine erste Protokollkennung bezüglich eines ersten Datenübertragungsprotokolls, das mit dem ersten Datentransportdienst verwendbar ist,
- eine zweite Datengruppe, die einer Konfiguration des ersten Datenübertragungsprotokolls entspricht.

2. Verfahren nach Anspruch 1, bei dem das Format der ersten Mitteilung von dem Datentransportdienst unabhängig ist, der von der ersten Dienstkennung identifiziert wird.

3. Verfahren nach Anspruch 1 oder 2, bei dem das Format der zweiten Mitteilung von dem Datenübertragungsprotokoll unabhängig ist, das von der ersten Protokollkennung identifiziert wird.

4. Verfahren nach einem der Ansprüche 1 bis 3, wobei die erste Mitteilung eine erste Datengruppenkennung enthält,
wobei das Verfahren einen Schritt der Aufzeichnung der ersten Datengruppe zusammen mit der ersten Dienstkennung und mit der ersten Datengruppenkennung durch die Empfangsvorrichtung in einem ersten Speicher enthält.

5. Verfahren nach einem der Ansprüche 1 bis 4, wobei die zweite Mitteilung eine zweite Datengruppenkennung enthält,
wobei das Verfahren einen Schritt der Aufzeichnung der zweiten Datengruppe zusammen mit der ersten Protokollkennung und mit der zweiten Datengruppenkennung durch die Empfangsvorrichtung in einem zweiten Speicher enthält.

6. Verfahren nach einem der Ansprüche 1 bis 5, das enthält:
- einen Schritt (230; 330; 430) der Übertragung, von der Sendevorrichtung zur Empfangsvorrichtung mit dem Ziel der Ausführung einer ersten Aktion bezüglich eines zweiten Datentransportdiensts, einer dritten Mitteilung, die eine zweite Dienstkennung bezüglich des zweiten Datentransportdiensts und eine erste Aktionskennung bezüglich der ersten Aktion enthält,
- einen Schritt der Ausführung der ersten Aktion durch die Empfangsvorrichtung.

7. Verfahren nach einem der Ansprüche 1 bis 6, das enthält:
- einen Schritt (240; 340; 440) der Übertragung, von der Sendevorrichtung zur Empfangsvorrichtung mit dem Ziel der Ausführung einer zweiten Aktion bezüglich eines zweiten Datenübertragungsprotokolls, einer vierten Mitteilung, die eine zweite Protokollkennung bezüglich des zweiten Datenübertragungsprotokolls und eine zweite Aktionskennung bezüglich der zweiten Aktion enthält,
- einen Schritt der Ausführung der zweiten Aktion durch die Empfangsvorrichtung.

8. Verfahren nach Anspruch 6 oder 7, das einen Schritt der Überprüfung der Kompatibilität zwischen dem von der zweiten Protokollkennung identifizierten Datenübertragungsprotokoll und dem von der zweiten Dienstkennung identifizierten Datentransportdienst durch die Empfangsvorrichtung enthält, wobei der Schritt der Ausführung der zweiten Aktion dazu bestimmt ist, unter Kompatibilitätsbedingungen ausgeführt zu werden.

9. Vorrichtung (EQ), die Kommunikationseinrichtungen enthält, die eine erste Mitteilung und eine zweite Mitteilung an eine Empfangsvorrichtung senden können, wobei die Kommunikationseinrichtungen konzipiert sind, um die erste Mitteilung und die zweite Mitteilung getrennt zu senden,
wobei die erste Mitteilung enthält:
- eine erste Dienstkennung bezüglich eines ersten Datentransportdiensts,
- eine erste Datengruppe, die einer Konfiguration des ersten Datentransportdiensts entspricht,
wobei die Vorrichtung **dadurch gekennzeichnet ist, dass** die zweite Mitteilung enthält:
- eine erste Protokollkennung bezüglich eines ersten Datenübertragungsprotokolls, das mit dem ersten Datentransportdienst verwendbar ist,
- eine zweite Datengruppe, die einer Konfiguration des ersten Datenübertragungsprotokolls entspricht.

10. Vorrichtung (MD), die auf ein Kommunikationsnetzwerk zugreift, die enthält
- Kommunikationseinrichtungen (210; 310; 410), die von einer Sendevorrichtung gesendete Mitteilungen empfangen können, und
- Verarbeitungseinrichtungen, die eine erste und eine zweite von der Sendevorrichtung empfangene Mitteilung verarbeiten können,
wobei die erste Mitteilung und die zweite Mitteilung getrennt empfangen und verarbeitet werden,
wobei die erste Mitteilung enthält:
- eine erste Dienstkennung bezüglich eines ersten Datentransportdiensts,
- eine erste Datengruppe, die einer Konfiguration des ersten Datentransportdiensts entspricht,
wobei die Vorrichtung **dadurch gekennzeichnet ist, dass** die zweite Mitteilung enthält:
- eine erste Protokollkennung bezüglich eines ersten Dätenübertragungsprotokolls, das mit dem ersten Datentransportdienst verwendbar ist,
- eine zweite Datengruppe entsprechend einer Konfiguration des ersten Datenübertragungsprotokolls.

11. eine Gruppe von zwei Signalen, die ein erstes Signal und ein zweites Signal enthält,
wobei das erste Signal das dazu bestimmt ist, von einer Sendevorrichtung gesendet und von einer Empfangsvorrichtung empfangen zu werden,
wobei das erste Signal eine erste Mitteilung übermittelt, die enthält:
- eine erste Protokollkennung bezüglich eines ersten Datenübertragungsprotokolls,
- eine zweite Datengruppe, die einer Konfiguration des ersten Datenübertragungsprotokolls entspricht,
wobei das zweite Signal dazu bestimmt ist, von der Sendevorrichtung gesendet und von der Empfangsvorrichtung empfangen zu werden, wobei das zweite Signal eine zweite Mitteilung übermittelt,
wobei die erste Mitteilung dazu bestimmt ist, getrennt von der zweiten Mitteilung gesendet zu werden,
wobei die Gruppe von zwei Signalen **dadurch gekennzeichnet ist, dass** die zweite Mitteilung enthält:
- eine erste Dienstkennung bezüglich eines ersten Datentransportdiensts, die mit dem ersten Datentransportdienst verwendet wirdverwendbar
- erste Datengruppe, die einer Konfiguration des ersten Datentransportdiensts entspricht.
